# EUROPÄISCHE PATENTSCHRIFT

(11) **EP 2 946 965 B1**
(45) Veröffentlichungstag und Bekanntmachung des Hinweises auf die Patenterteilung: **07.11.2018**
(21) Anmeldenummer: 15165708.7
(22) Anmeldetag: 29.04.2015
(51) Int. Cl.: B60L 1/00, H02M 1/10, H02M 1/36, B60L 3/00, B60L 15/00, B60L 15/20

(54) **VORRICHTUNG UND VERFAHREN ZUR BEGRENZUNG DES EINSCHALTSTROMS BEIM BETREIBEN EINER KAPAZITIVEN LAST AN EINEM DREIPHASENWECHSELRICHTER**
DEVICE AND METHOD FOR LIMITING THE SWITCH-ON CURRENT WHEN OPERATING A CAPACITIVE LOAD ON A THREE-PHASE INVERTER
DISPOSITIF ET PROCÉDÉ DE LIMITATION DU COURANT DE DÉMARRAGE LORS DU FONCTIONNEMENT D'UNE CHARGE CAPACITIVE SUR UN ONDULEUR TRIPHASÉ

(30) Priorität: 12.05.2014 DE 102014208834
(43) Veröffentlichungstag der Anmeldung: 25.11.2015
(73) Patentinhaber: Deere & Company, Moline, IL 61265 (US)
(72) Erfinder: Keil, Roger, 65207 Wiesbaden (DE)
(74) Vertreter: Dehnhardt, Florian Christopher

(56) Entgegenhaltungen:
- US-A1- 2009 140 702

## Beschreibung

Die Erfindung betrifft eine Vorrichtung sowie ein Verfahren zur Begrenzung des Einschaltstroms beim Betreiben einer kapazitiven Last an einem Dreiphasenwechselrichter.

Die Feldbearbeitung mittels elektrisch angetriebener Anbaugeräte an landwirtschaftlichen Traktoren gewinnt zunehmend an Bedeutung. Die Bereitstellung der hierfür benötigten elektrischen Energie erfolgt seitens des landwirtschaftlichen Traktors, wozu dieser typischerweise im Heckbereich eine oder mehrere Anschlussdosen zur Versorgung des elektrisch angetriebenen Anbaugeräts mit elektrischer Energie aufweist. Eine derartige Konfiguration ist beispielsweise von landwirtschaftlichen Traktoren der Modelle 6RE von John Deere bekannt. Die Anschlussdosen stehen hier mit einem aus einem Gleichstromzwischenkreis des landwirtschaftlichen Traktors gespeisten Dreiphasenwechselrichter in Verbindung. Der Dreiphasenwechselrichter umfasst für jede der Phasen zwei seriell zwischen einem positiven und einem negativen Versorgungsspannungspotential des Gleichstromzwischenkreises angeordnete Schaltmittel, wobei zwischen den Schaltmitteln jeweils ein zu einem zugehörigen ersten, zweiten oder dritten Lastausgang des Dreiphasenwechselrichters führender Abgriff vorgesehen ist. Auf diese Weise lässt sich jeder der Lastausgänge entweder mit dem positiven Versorgungsspannungspotential oder dem negativen Versorgungsspannungspotential des Gleichstromzwischenkreises verbinden, wobei sich durch entsprechende Ansteuerung der Schaltmittel nicht nur Zwei- bzw. Dreiphasenwechselstrom, sondern auch Gleichstrom erzeugen lässt. In letzterem Fall können gerade bei Inbetriebnahme kapazitiver Lasten vergleichsweise hohe Einschaltströme auftreten. Dies erfordert bislang eine aufwändige interne Leistungsüberwachung und -regelung des Dreiphasenwechselrichters.

Aufgabe der vorliegenden Erfindung ist es daher, eine vereinfachte Möglichkeit zur Begrenzung des Einschaltstroms beim Betreiben einer kapazitiven Last an einem Dreiphasenwechselrichter anzugeben.

Diese Aufgabe wird durch eine Vorrichtung zur Begrenzung des Einschaltstroms beim Betreiben einer kapazitiven Last an einem Dreiphasenwechselrichter mit den Merkmalen des Patentanspruchs 1 gelöst.

### Stand der Technik

Dokument US 2009 / 0 140 702 A1 offenbart eine Vorrichtung zur Begrenzung des Einschaltstroms beim Betreiben einer kapazitiven Last an einem Dreiphasenwechselrichter

Die erfindungsgemäße Vorrichtung umfasst einen Dreiphasenwechselrichter mit ersten, zweiten und dritten Lastausgängen, die jeweils durch entsprechende Ansteuerung zugehöriger Schaltmittel mit einem ersten Gleichspannungspotential oder einem gegenüber dem ersten Gleichspannungspotential abweichenden zweiten Gleichspannungspotential verbindbar sind. Die kapazitive Last ist in einem Vorlademodus durch Ansteuerung der Schaltmittel in einem Strombegrenzungszweig über den ersten Lastausgang mittels eines zwischengeschalteten Strombegrenzungselements, insbesondere eines Strombegrenzungswiderstands oder einer Strombegrenzungsinduktivität, mit dem ersten Gleichspannungspotential und über den dritten Lastausgang mit dem zweiten Gleichspannungspotential verbunden, sodass ein zwischen dem Dreiphasenwechselrichter und der kapazitiven Last auftretender Einschaltstrom der Höhe nach begrenzt wird. In einem auf den Lademodus folgenden Normalbetriebsmodus ist die kapazitive Last durch Ansteuerung der Schaltmittel in einem Stromversorgungszweig über den zweiten Lastausgang unmittelbar mit dem ersten Gleichspannungspotential und über den dritten Lastausgang mit dem zweiten Gleichspannungspotential verbunden.

Mit anderen Worten werden die ohnehin vorhandenen Schaltmittel des Dreiphasenwechselrichters zur Verwirklichung der beiden Modi genutzt, wobei neben einer geänderten Ansteuerung lediglich ein zusätzliches Strombegrenzungselement vorzusehen ist. Die erfindungsgemäße Vorrichtung zeichnet sich daher durch einen besonders geringen konstruktiven Mehraufwand aus.

Bei den Schaltmitteln handelt es sich typischerweise um Leistungs-MOSFETs oder IGBTs, die mittels einer von dem Dreiphasenwechselrichter umfassten Kontrolleinrichtung zur Bereitstellung eines gewünschten Ausgangsstromtyps, wahlweise eines Zwei- bzw. Dreiphasenstroms oder eines Gleichstroms, angesteuert werden. Die Umschaltung vom Vorlademodus in den Normalbetriebsmodus kann hierbei seitens der Kontrolleinrichtung zeitgesteuert oder aber nach Maßgabe eines mittels des Strombegrenzungselements erfassten Einschaltstroms erfolgen. Letzteres ermöglicht es, dass die Strombegrenzung erst dann aufgehoben wird, wenn der beim Vorladen der kapazitiven Last fließende und mittels des Strombegrenzungselements erfasste Einschaltstrom auf unkritische Werte abgefallen ist.

Vorteilhafte Ausführungen der erfindungsgemäßen Vorrichtung gehen aus den Unteransprüchen hervor.

Vorzugsweise ist das Strombegrenzungselement im Normalbetriebsmodus zumindest zeitweise kurzgeschlossen, sodass eine mögliche Unterbrechung der Stromversorgung der kapazitiven Last, wie sie im Falle einer sequentiellen Umschaltung vom Vorlademodus in den Normalbetriebsmodus auftreten kann, vermieden wird.

Genauer gesagt steuert die Kontrolleinrichtung die Schaltmittel des Dreiphasenwechselrichters derart an, dass während des Vorlademodus ausschließlich die zwischen dem ersten Lastausgang und dem ersten Gleichspannungspotential bzw. dem dritten Lastausgang und dem zweiten Gleichspannungspotential angeordneten Schaltmittel im Strombegrenzungszweig geschlossen werden, während die übrigen Schaltmittel in ihrem geöffneten Zustand verbleiben. Im darauffolgenden Normalbetriebsmodus wird von der Kontrolleinrichtung zusätzlich das zwischen dem zweiten Lastausgang und dem ersten Gleichspannungspotential angeordnete Schaltmittel im Stromversorgungszweig geschlossen, sodass das Strombegrenzungselement im Stromversorgungszweig überbrückt und eine insofern bestehende Strombegrenzung bei der Versorgung der kapazitiven Last mit elektrischer Energie aufgehoben wird. Anschließend kann das zwischen dem ersten Lastausgang und dem ersten Gleichspannungspotential angeordnete Schaltmittel im Strombegrenzungszweig geöffnet werden oder aber weiterhin in seinem geschlossenen Zustand verbleiben.

Typischerweise handelt es sich bei dem ersten Gleichspannungspotential um ein positives Versorgungsspannungspotential und/oder bei dem zweiten Gleichspannungspotential um ein negatives Versorgungsspannungspotential eines zur Speisung des Dreiphasenwechselrichters vorgesehenen potentialfreien Gleichstromkreises. Bei dem Gleichstromkreis kann es sich um einen aus einem elektrischen Energiespeicher und/oder aus einem Kurbelwellengenerator gespeisten Gleichstromzwischenkreis handeln, wobei der von dem Kurbelwellengenerator erzeugte Drehstrom vor seiner Einspeisung in den Gleichstromzwischenkreis mittels eines invers betriebenen weiteren Dreiphasenwechselrichters gleichgerichtet wird. Bei dem elektrischen Energiespeicher handelt es sich beispielsweise um einen in Fahrzeuganwendungen üblichen Lithium-Ionen-Akkumulator.

Die kapazitive Last kann als Speicherkondensator zum Betreiben einer Gleichstromlast, beispielsweise eines über einen zugehörigen Dreiphasenwechselrichter betriebenen Drehstrommotors, ausgebildet sein. Der Speicherkondensator dient hierbei der Pufferung möglicher Lastspitzen beim Betreiben der Gleichstromlast.

Des Weiteren ist es denkbar, dass eine elektrische Steckverbindung zur reversiblen Auftrennung der erfindungsgemäßen Vorrichtung in ein den Dreiphasenwechselrichter umfassendes Stromversorgungsmodul und ein die kapazitive Last umfassendes Antriebsmodul vorgesehen ist, wobei das Strombegrenzungselement entweder dem Stromversorgungsmodul oder dem Antriebsmodul zugeordnet ist. Das Stromversorgungsmodul ist typischerweise eines von mehreren elektrischen Systemen des landwirtschaftlichen Traktors, während das Antriebsmodul Bestandteil eines an dem landwirtschaftlichen Traktor anbringbaren elektrisch angetriebenen Anbaugeräts sein kann. Für den Fall, dass das Strombegrenzungselement dem Antriebsmodul zugeordnet ist, kann dessen Wert spezifisch an die jeweilige kapazitive Last bzw. den insofern bei Inbetriebnahme zu erwartenden Einschaltstrom angepasst werden. Eine Zuordnung zum Stromversorgungsmodul hat hingegen den Vorteil, dass eine Begrenzung des Einschaltstroms auch bei solchen Antriebsmodulen erfolgen kann, die selbst über kein entsprechendes Strombegrenzungselement verfügen. Da in diesem Fall für sämtliche auftretende kapazitive Lasten ein gemeinsames Strombegrenzungselement vorgesehen ist, ist dessen Wert derart zu wählen, dass dieser sämtliche zu erwartende Einschaltströme verlässlich abdeckt. Die elektrische Steckverbindung kann traktorseitig als im Heck- oder Frontbereich angebrachte Anschlussdose ausgeführt sein. An diese ist anbaugeräteseitig eine komplementär ausgebildete Steckerkupplung anschließbar. Die Anschlussdose bzw. Steckerkupplung kann neben der Bereitstellung elektrischer Energie der Übertragung diverser Daten- bzw. Sensorsignale zur Steuerung und Überwachung des elektrisch angetriebenen Anbaugeräts bzw. der von diesem umfassten Antriebsmodule dienen.

Die erfindungsgemäße Vorrichtung bzw. das erfindungsgemäße Verfahren zur Begrenzung des Einschaltstroms beim Betreiben einer kapazitiven Last an einem Dreiphasenwechselrichter wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein erstes Ausführungsbeispiel der erfindungsgemäßen Vorrichtung zur Begrenzung des Einschaltstroms beim Betreiben einer kapazitiven Last an einem Dreiphasenwechselrichter in einem Vorlademodus,
- Fig. 2: das in Fig. 1 dargestellte Ausführungsbeispiel der erfindungsgemäßen Vorrichtung in einem auf den Vorlademodus folgenden Normalbetriebsmodus,
- Fig. 3: ein zweites Ausführungsbeispiel der erfindungsgemäßen Vorrichtung zur Begrenzung des Einschaltstroms beim Betreiben einer kapazitiven Last an einem Dreiphasenwechselrichter in einem Vorlademodus,
- Fig. 4: das in Fig. 3 dargestellte Ausführungsbeispiel der erfindungsgemäßen Vorrichtung in einem auf den Vorlademodus folgenden Normalbetriebsmodus, und
- Fig. 5: ein Ausführungsbeispiel des erfindungsgemäßen Verfahrens zur Begrenzung des Einschaltstroms beim Betreiben einer kapazitiven Last an einem Dreiphasenwechselrichter.

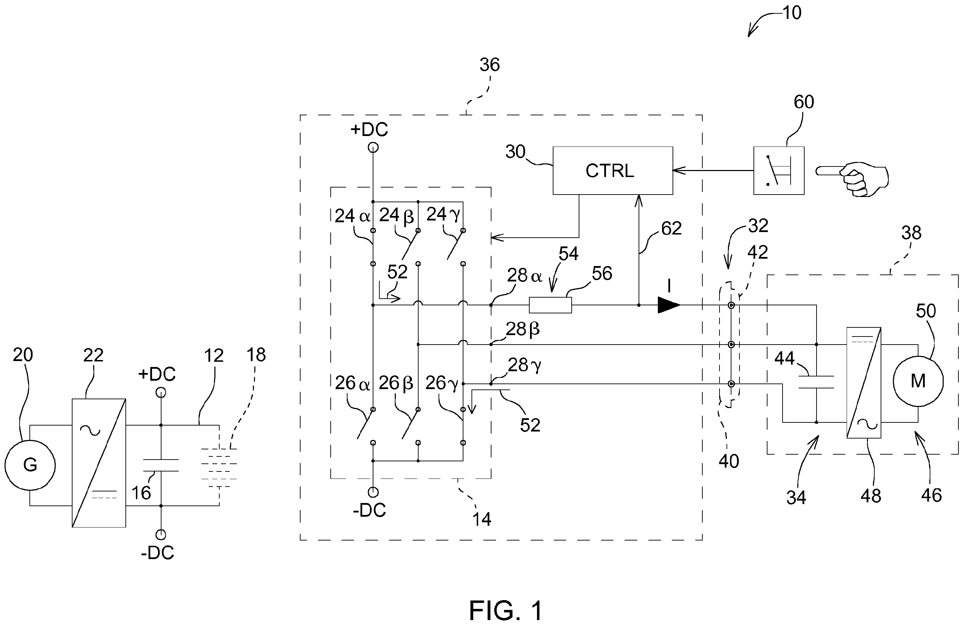

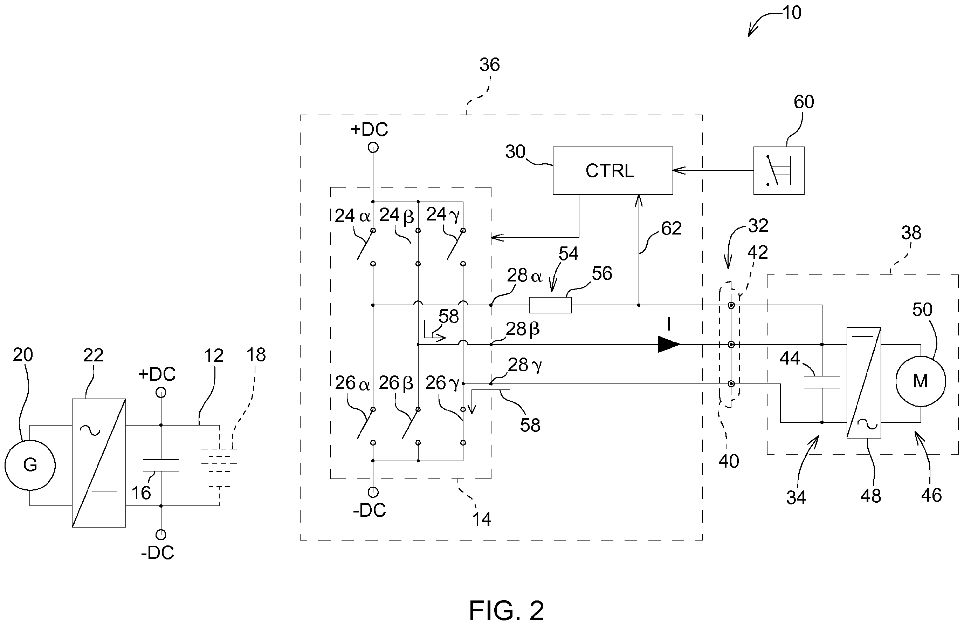

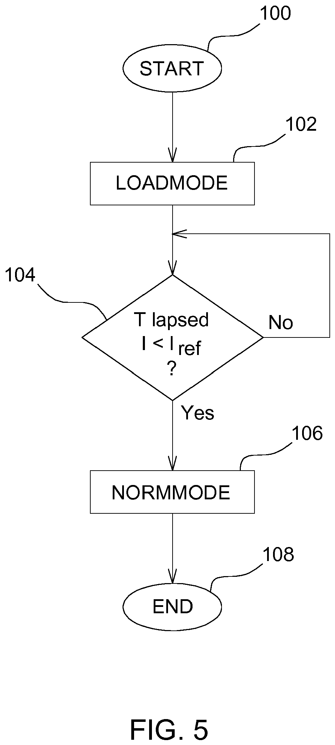

Fig. 1 und 2 zeigen ein erstes Ausführungsbeispiel der erfindungsgemäßen Vorrichtung für einen nicht dargestellten landwirtschaftlichen Traktor in jeweils unterschiedlichen Modi, wobei die Funktionsweise der erfindungsgemäßen Vorrichtung unter Bezugnahme auf das in Fig. 5 dargestellte erfindungsgemäße Verfahren beschrieben wird.

Die Vorrichtung 10 umfasst einen aus einem Gleichstromzwischenkreis 12 des landwirtschaftlichen Traktors gespeisten Dreiphasenwechselrichter 14 konventioneller Bauart. Der mittels eines ersten Speicherkondensators 16 gepufferte Gleichstromzwischenkreis 12 wird seinerseits aus einem optional vorgesehenen elektrischen Energiespeicher 18 in Gestalt eines in Fahrzeuganwendungen üblichen Lithium-Ionen-Akkumulators und/oder aus einem Kurbelwellengenerator 20 des landwirtschaftlichen Traktors gespeist, wobei der von dem Kurbelwellengenerator 20 erzeugte Drehstrom vor seiner Einspeisung in den Gleichstromzwischenkreis 12 mittels eines invers betriebenen weiteren Dreiphasenwechselrichters 22 gleichgerichtet wird. Der Gleichstromzwischenkreis 12 ist hierbei zur galvanischen Trennung gegenüber dem Massepotential des landwirtschaftlichen Traktors potentialfrei ausgeführt.

Der Dreiphasenwechselrichter 14 umfasst für jede der drei Phasen α, β, γ zwei seriell zwischen einem positiven Versorgungsspannungspotential +DC und einem negativen Versorgungsspannungspotential -DC des Gleichstromzwischenkreises 12 angeordnete Schaltmittel 24α, 24β, 24γ, 26α, 26β, 26γ, wobei zwischen den Schaltmitteln 24α, 24β, 24γ, 26α, 26β, 26γ jeweils ein zu einem zugehörigen ersten, zweiten oder dritten Lastausgang 28α, 28β, 28γ des Dreiphasenwechselrichters 14 führender Abgriff vorgesehen ist. Die im vorliegenden Fall als IGBTs ausgebildeten Schaltmittel 24α, 24β, 24γ, 26α, 26β, 26γ sind mittels einer von dem Dreiphasenwechselrichter 14 umfassten Kontrolleinrichtung 30 ansteuerbar. Durch entsprechende Ansteuerung der Schaltmittel 24α, 24β, 24γ, 26α, 26β, 26γ lässt sich jeder der Lastausgänge 28α, 28β, 28γ entweder mit dem positiven Versorgungsspannungspotential +DC oder dem negativen Versorgungsspannungspotential -DC des Gleichstromzwischenkreises 12 verbinden. Dies erlaubt die Erzeugung sowohl von Zwei- bzw. Dreiphasenwechselstrom als auch von Gleichstrom.

Die folgenden Betrachtungen beschränken sich auf einen Gleichstrombetrieb des Dreiphasenwechselrichters 14 sowie eine über eine elektrische Steckverbindung 32 an dem Dreiphasenwechselrichter 14 angeschlossene kapazitive Last 34.

Die elektrische Steckverbindung 32 dient der reversiblen Auftrennung der Vorrichtung 10 in ein den Dreiphasenwechselrichter 14 umfassendes Stromversorgungsmodul 36 und ein die kapazitive Last 34 umfassendes Antriebsmodul 38. Das Stromversorgungsmodul 36 ist eines von mehreren elektrischen Systemen des landwirtschaftlichen Traktors, während das Antriebsmodul 38 Bestandteil eines an dem landwirtschaftlichen Traktor anbringbaren, nicht dargestellten elektrisch angetriebenen Anbaugeräts ist.

Die elektrische Steckverbindung 32 ist traktorseitig als im Heck- oder Frontbereich angebrachte Anschlussdose 40 ausgeführt. An die Anschlussdose 40 ist anbaugeräteseitig eine komplementär ausgebildete Steckerkupplung 42 anschließbar. Die Anschlussdose 40 bzw. Steckerkupplung 42 dient neben der Bereitstellung elektrischer Energie der Übertragung diverser Daten- bzw. Sensorsignale zur Steuerung und Überwachung des elektrisch angetriebenen Anbaugeräts bzw. des von diesem umfassten Antriebsmoduls 38.

Im vorliegenden Fall ist die kapazitive Last 34 als zweiter Speicherkondensator 44 zum Betreiben einer von dem elektrisch angetriebenen Anbaugerät bzw. dem Antriebsmodul 38 umfassten Gleichstromlast 46, beispielsgemäß eines über einen zugehörigen Dreiphasenwechselrichter 48 betriebenen Drehstrommotors 50, ausgebildet. Der zweite Speicherkondensator 44 dient hierbei der Vergrößerung der Kapazität des ersten Speicherkondensators 16 und damit der Pufferung möglicher Lastspitzen beim Betreiben der Gleichstromlast 46.

Fig. 1 zeigt die Vorrichtung 10 in einem Vorlademodus LOADMODE, in dem die kapazitive Last 34 durch Ansteuerung der Schaltmittel 24α, 26γ in einem Strombegrenzungszweig 52 über den ersten Lastausgang 28α mittels eines Strombegrenzungselements 54 in Gestalt eines zwischengeschalteten Strombegrenzungswiderstands 56 mit dem positiven Versorgungsspannungspotential +DC und über den dritten Lastausgang 28γ mit dem negativen Versorgungsspannungspotential - DC verbunden ist, sodass ein zwischen dem Dreiphasenwechselrichter 14 und der kapazitiven Last 34 auftretender Einschalt- bzw. Ladestrom I der Höhe nach begrenzt wird. Ein solcher Ladestrom I tritt immer dann auf, wenn die kapazitive Last 34 bei ihrer Inbetriebnahme nicht hinreichend aufgeladen ist. Beispielsgemäß ist der Strombegrenzungswiderstand 56 dem Stromversorgungsmodul 36 zugeordnet. Hierbei sei angemerkt, dass anstelle des Strombegrenzungswiderstands 56 auch die Verwendung einer Strombegrenzungsinduktivität denkbar ist.

Fig. 2 zeigt die Vorrichtung 10 in einem auf den Vorlademodus LOADMODE folgenden Normalbetriebsmodus NORMMODE, in dem die kapazitive Last 34 durch Ansteuerung der Schaltmittel 24β, 26γ in einem Stromversorgungszweig 58 über den zweiten Lastausgang 28β unmittelbar mit dem positiven Versorgungsspannungspotential +DC und über den dritten Lastausgang 28γ mit dem negativen Versorgungsspannungspotential -DC verbunden ist und eine insofern bestehende Strombegrenzung bei der Versorgung der kapazitiven Last 34 mit elektrischer Energie aufgehoben ist.

Wie sich dem in Fig. 5 dargestellten Flussdiagramm entnehmen lässt, wird das Verfahren zum Betreiben der Vorrichtung 10 gestartet, sobald aufgrund einer über ein Bedienelement 60 veranlassten und in Fig. 1 angedeuteten Bedieneranforderung von der Kontrolleinrichtung 30 in einem Initialisierungsschritt 100 erkannt wird, dass ein Gleichstrombetrieb des Dreiphasenwechselrichters 14 beabsichtigt ist.

In einem auf den Initialisierungsschritt 100 folgenden ersten Schritt 102 wird die Vorrichtung 10 in den Vorlademodus LOADMODE versetzt. Hierzu steuert die Kontrolleinrichtung 30 den Dreiphasenwechselrichter 14 derart an, dass ausschließlich die zwischen dem ersten Lastausgang 28α und dem positiven Versorgungsspannungspotential +DC bzw. dem dritten Lastausgang 28γ und dem negativen Versorgungsspannungspotential -DC angeordneten Schaltmittel 24α, 26γ im Strombegrenzungszweig 52 geschlossen werden, während die übrigen Schaltmittel 24β, 24γ, 26α, 26β in ihrem geöffneten Zustand verbleiben.

Um zu entscheiden, ob der Vorlademodus LOADMODE zu beenden und die Vorrichtung 10 in den Normalbetriebsmodus NORMMODE zu versetzen ist, wird in einem zweiten Schritt 104 geprüft, ob ein vorgegebener Zeitzähler T seit Beginn des Gleichstrombetriebs und/oder ein vorgegebener Schwellenwert I_{ref} durch den Ladestrom I unterschritten ist. Trifft dies zu, so wird mit einem dritten Schritt 106 fortgefahren, in dem die Vorrichtung 10 in den Normalbetriebsmodus NORMMODE umgeschaltet wird. Andernfalls wird der zweite Schritt 104 erneut durchlaufen. Die Umschaltung vom Vorlademodus LOADMODE in den Normalbetriebsmodus NORMMODE erfolgt daher seitens der Kontrolleinrichtung 30 zeitgesteuert oder aber nach Maßgabe des mittels des Strombegrenzungswiderstands 56 über eine in Fig. 1 und 2 dargestellte Sensorleitung 62 erfassten Ladestroms I. Letzteres ermöglicht es, dass die Strombegrenzung erst dann aufgehoben wird, wenn der beim Vorladen der kapazitiven Last 34 fließende und mittels des Strombegrenzungswiderstands 56 erfasste Ladestrom I auf unkritische Werte abgefallen ist, mithin wenn die an den beiden Speicherkondensatoren 16, 44 anliegenden Spannungen im Wesentlichen gleich sind.

Zur Umschaltung der Vorrichtung 10 vom Vorlademodus LOADMODE in den Normalbetriebsmodus NORMMODE wird im dritten Schritt 106 zusätzlich das zwischen dem zweiten Lastausgang 28β und dem positiven Versorgungsspannungspotential +DC angeordnete Schaltmittel 24β im Stromversorgungszweig 58 geschlossen, sodass der Strombegrenzungswiderstand 56 im Stromversorgungszweig 58 kurzgeschlossen bzw. überbrückt wird. Anschließend wird das zwischen dem ersten Lastausgang 28α und dem positiven Versorgungsspannungspotential +DC angeordnete Schaltmittel 24α im Strombegrenzungszweig 52 entsprechend der Darstellung in Fig. 2 geöffnet oder verbleibt weiterhin in seinem geschlossenen Zustand.

Mit anderen Worten ist der Strombegrenzungswiderstand 56 im Normalbetriebsmodus zumindest zeitweise kurzgeschlossen, sodass eine mögliche Unterbrechung der Stromversorgung der kapazitiven Last 34, wie sie im Falle einer sequentiellen Umschaltung der Vorrichtung 10 vom Vorlademodus in den Normalbetriebsmodus denkbar ist, vermieden wird.

In einem auf den zweiten Schritt 104 folgenden Schlussschritt 106 wird das Verfahren schließlich beendet.

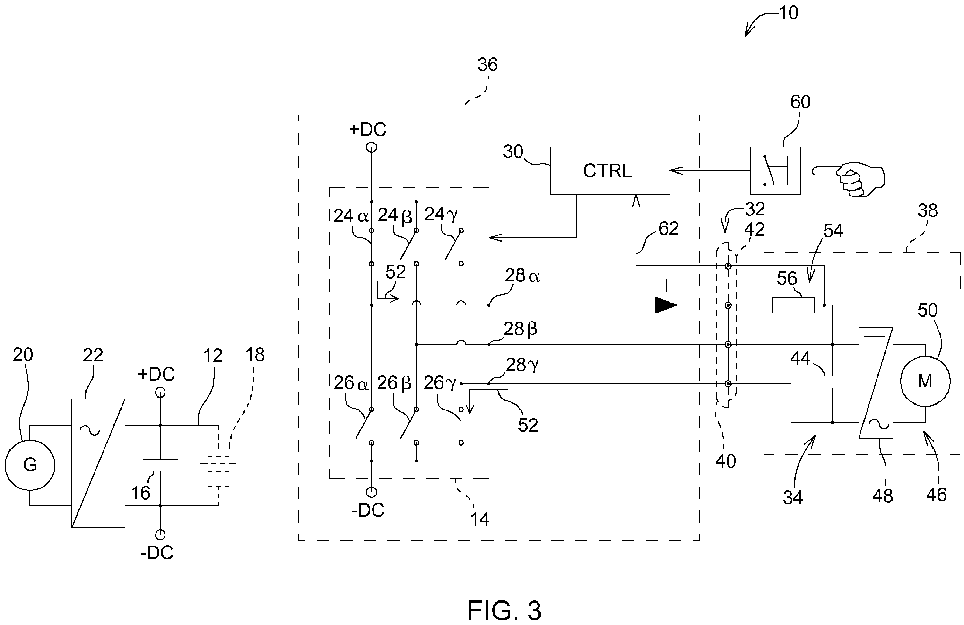

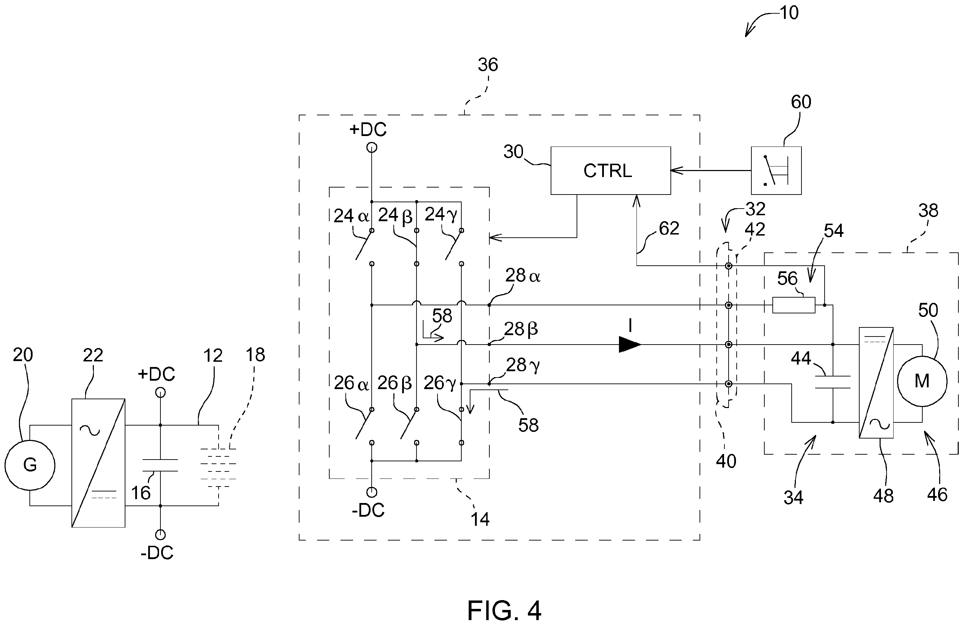

Fig. 3 und 4 zeigen ein zweites Ausführungsbeispiel der erfindungsgemäßen Vorrichtung. Dieses unterscheidet sich von dem in Fig. 1 und 2 dargestellten ersten Ausführungsbeispiel einzig dadurch, dass der Strombegrenzungswiderstand 56 dem Antriebmodul 38 zugeordnet ist. Bezüglich der Funktionsweise der Vorrichtung 10 bestehen keine Unterschiede, sodass insofern auf die vorstehenden Ausführungen verwiesen sei.

## Patentansprüche

1. Vorrichtung zur Begrenzung des Einschaltstroms beim Betreiben einer kapazitiven Last an einem Dreiphasenwechselrichter, umfassend einen Dreiphasenwechselrichter (14) mit ersten, zweiten und dritten Lastausgängen (28α, 28β, 28γ), die jeweils durch entsprechende Ansteuerung zugehöriger Schaltmittel (24α, 24β, 24γ, 26α, 26β, 26γ) mit einem ersten Gleichspannungspotential (+DC) oder einem gegenüber dem ersten Gleichspannungspotential (+DC) abweichenden zweiten Gleichspannungspotential (-DC) verbindbar sind, und ein eine kapazitive Last umfassendes Antriebsmodul, wobei in einem Gleichstrombetrieb des Dreiphasenwechselrichters (14) eine Kontrolleinrichtung (30) dazu eingerichtet ist die kapazitive Last (34) in einem Vorlademodus (LOADMODE) durch Ansteuerung der Schaltmittel (24α, 26γ) in einem Strombegrenzungszweig (52) über den ersten Lastausgang (28α) mittels eines zwischengeschalteten Strombegrenzungselements (54), insbesondere eines Strombegrenzungswiderstands (56) oder einer Strombegrenzungsinduktivität, mit dem ersten Gleichspannungspotential (+DC) und über den dritten Lastausgang (28γ) mit dem zweiten Gleichspannungspotential (-DC) zu verbinden, sodass ein zwischen dem Dreiphasenwechselrichter (14) und der kapazitiven Last (34) auftretender Einschaltstrom (I) der Höhe nach begrenzt wird, und dass in einem auf den Vorlademodus (LOADMODE) folgenden Normalbetriebsmodus (NORMMODE) die Kontrolleinrichtung (30) dazu eingerichtet ist die kapazitive Last (34) durch Ansteuerung der Schaltmittel (24β, 26γ) in einem Stromversorgungszweig (58) über den zweiten Lastausgang (28β) unmittelbar mit dem ersten Gleichspannungspotential (+DC) und über den dritten Lastausgang (28γ) mit dem zweiten Gleichspannungspotential (-DC) zu verbinden, **dadurch gekennzeichnet, dass** die von dem Dreiphasenwechselrichter (14) umfasste Kontrolleinrichtung (30)dazu eingerichtet ist die Schaltmittel (24α, 24β, 24γ, 26α, 26β, 26γ) zur Bereitstellung wahlweise eines Zwei- bzw. Dreiphasenstroms oder eines Gleichstroms an zu steuern, wobei eine elektrische Steckverbindung (32) zur reversiblen Auftrennung der Vorrichtung (10) in ein den Dreiphasenwechselrichter (14) umfassendes Stromversorgungsmodul (36) und ein die kapazitive Last (34) umfassendes Antriebsmodul (38) vorgesehen ist, wobei das Strombegrenzungselement (54) entweder dem Stromversorgungsmodul (36) oder dem Antriebsmodul (38) zugeordnet ist.

2. Vorrichtung nach Anspruch 1, **dadurch gekennzeichnet, dass** das Strombegrenzungselement (54) im Normalbetriebsmodus zumindest zeitweise kurzgeschlossen ist.

3. Vorrichtung nach Anspruch 1 oder 2, **dadurch gekennzeichnet, dass** es sich bei dem ersten Gleichspannungspotential um ein positives Versorgungsspannungspotential (+DC) und/oder bei dem zweiten Gleichspannungspotential um ein negatives Gleichspannungspotential (-DC) eines zur Speisung des Dreiphasenwechselrichters (14) vorgesehenen potentialfreien Gleichstromkreises (12) handelt.

4. Vorrichtung nach einem der Ansprüche 1 bis 3, **dadurch gekennzeichnet, dass** die kapazitive Last (34) als Speicherkondensator (44) zum Betreiben einer Gleichstromlast (46) ausgebildet ist.

5. Antriebsmodul für ein elektrisch angetriebenes Anbaugerät mit einer kapazitiven Last (34) und einem der kapazitiven Last (34) zur Begrenzung des Einschaltstroms (I) vorgeschalteten Strombegrenzungselement (54) zur Verwendung in einer Vorrichtung (10) nach Anspruch 1.

6. Stromversorgungsmodul für einen landwirtschaftlichen Traktor mit einem Dreiphasenwechselrichter (14) und einem dem Dreiphasenwechselrichter (14) zur Begrenzung des Einschaltstroms (I) nachgeschalteten Strombegrenzungselement (54) zur Verwendung in einer Vorrichtung (10) nach Anspruch 1.

## Claims

1. Apparatus for limiting the switch-on current when operating a capacitive load from a three-phase inverter, comprising a three-phase inverter (14) having first, second and third load outputs (28α, 28β, 28γ), which can each be connected to a first DC voltage potential (+DC) or to a second DC voltage potential (-DC) which differs from the first DC voltage potential (+DC) by accordingly controlling associated switching means (24α, 24β, 24γ, 26α, 26β, 26γ), and a drive module which comprises a capacitive load, wherein, during DC operation of the three-phase inverter (14), a control device (30) is set up to connect the capacitive load (34) to the first DC voltage potential (+DC) via the first load output (28α) by means of an interposed current-limiting element (54), in particular a current-limiting resistor (56) or a current-limiting inductance, and to the second DC voltage potential (-DC) via the third load output (28γ) in a preloading mode (LOADMODE) by controlling the switching means (24α, 26γ) in a current-limiting branch (52), with the result that the level of a switch-on current (I) which occurs between the three-phase inverter (14) and the capacitive load (34) is limited, and, in a normal operating mode (NORMMODE) which follows the preloading mode (LOADMODE), the control device (30) is set up to directly connect the capacitive load (34) to the first DC voltage potential (+DC) via the second load output (28β) and to the second DC voltage potential (-DC) via the third load output (28γ) by controlling the switching means (24β, 26γ) in a power supply branch (58), **characterized in that** the control device (30) included in the three-phase inverter (14) is set up to control the switching means (24α, 24β, 24γ, 26α, 26β, 26γ) to selectively provide a two-phase or three-phase current or a direct current, wherein an electrical plug connection (32) for reversibly separating the apparatus (10) into a power supply module (36) comprising the three-phase inverter (14) and a drive module (38) comprising the capacitive load (34) is provided, wherein the current-limiting element (54) is assigned either to the power supply module (36) or to the drive module (38).

2. Apparatus according to Claim 1, **characterized in that** the current-limiting element (54) is at least occasionally short-circuited in the normal operating mode.

3. Apparatus according to Claim 1 or 2, **characterized in that** the first DC voltage potential is a positive supply voltage potential (+DC) and/or the second DC voltage potential is a negative DC voltage potential (-DC) from a floating DC circuit (12) provided for the purpose of supplying the three-phase inverter (14) .

4. Apparatus according to one of Claims 1 to 3, **characterized in that** the capacitive load (34) is in the form of a storage capacitor (44) for operating a DC load (46).

5. Drive module for an electrically driven attachment, having a capacitive load (34) and a current-limiting element (54) connected upstream of the capacitive load (34) for the purpose of limiting the switch-on current (I), for use in an apparatus (10) according to Claim 1.

6. Power supply module for an agricultural tractor, having a three-phase inverter (14) and a current-limiting element (54) connected downstream of the three-phase inverter (14) for the purpose of limiting the switch-on current (I), for use in an apparatus (10) according to Claim 1.

## Revendications

1. Dispositif de limitation du courant de fermeture de circuit lors du fonctionnement d'une charge capacitive sur un onduleur triphasé, comprenant un onduleur triphasé (14) ayant des première, deuxième et troisième sorties de charge (28α, 28β, 28γ) qui peuvent respectivement être reliées à un premier potentiel de tension continue (+DC) ou à un deuxième potentiel de tension continue (-DC) différent du premier potentiel de tension continue (+DC) par une excitation correspondante de moyens de commutation (24α, 24β, 24γ, 26α, 26β, 26γ) associés, et un module d'entraînement comprenant une charge capacitive,
dans un mode de fonctionnement en courant continu de l'onduleur triphasé (14), un appareil de commande (30) étant conçu pour relier la charge capacitive (34) dans un mode de précharge (LOADMODE), en excitant les moyens de commutation (24α, 26γ) dans une branche de limitation de courant (52) par le biais de la première sortie de charge (28α) au moyen d'un élément de limitation du courant (54) intercalé, notamment une résistance de limitation du courant (56) ou une inductance de limitation du courant, au premier potentiel de tension continue (+DC) et, par le biais de la troisième sortie de charge (28γ), au deuxième potentiel de tension continue (-DC),
de sorte qu'un courant de fermeture de circuit (I) qui se produit entre l'onduleur triphasé (14) et la charge capacitive (34) est limité en fonction de l'amplitude, et que dans un mode de fonctionnement normal (NORMMODE) qui suit le mode de précharge (LOADMODE), l'appareil de commande (30) est conçu pour relier la charge capacitive (34), en excitant les moyens de commutation (24β, 26γ) dans une branche d'alimentation en courant (58) par le biais de la deuxième sortie de charge (28β) directement au premier potentiel de tension continue (+DC) et, par le biais de la troisième sortie de charge (28y), au deuxième potentiel de tension continue (-DC), **caractérisé en ce que** l'appareil de commande (30) compris par l'onduleur triphasé (14) est conçu pour exciter les moyens de commutation (24α, 24β, 24γ, 26α, 26β, 26γ) en vue de délivrer, au choix, un courant bi- ou triphasé ou un courant continu,
une connexion enfichable électrique (32) destinée à la déconnexion réversible du dispositif (10) se trouvant dans un module d'alimentation électrique (36) compris dans l'onduleur triphasé (14) et un module d'entraînement (38) comprenant la charge capacitive (34) étant présent, l'élément de limitation du courant (54) étant associé soit au module d'alimentation électrique (36), soit au module d'entraînement (38).

2. Dispositif selon la revendication 1, **caractérisé en ce qu'**en mode de fonctionnement normal, l'élément de limitation du courant (54) est au moins temporairement court-circuité.

3. Dispositif selon la revendication 1 ou 2, **caractérisé en ce que** le premier potentiel de tension continue est un potentiel de tension d'alimentation positif (+DC) et/ou le deuxième potentiel de tension continue est un potentiel de tension continue négatif (-DC) d'un circuit à courant continu (12) exempt de potentiel qui est destiné à alimenter l'onduleur triphasé (14) .

4. Dispositif selon l'une des revendications 1 à 3, **caractérisé en ce que** la charge capacitive (34) est réalisée sous la forme d'un condensateur d'accumulation (44) servant à faire fonctionner une charge de courant continu (46).

5. Module d'entraînement pour un appareil rapporté à entraînement électrique comprenant une charge capacitive (34) et un élément de limitation du courant (54) branché en amont de la charge capacitive (34) pour limiter le courant de fermeture de circuit (I), destiné à être utilisé dans un dispositif (10) selon la revendication 1.

6. Module d'alimentation électrique pour un tracteur agricole comprenant un onduleur triphasé (14) et un élément de limitation du courant (54) branché en aval de l'onduleur triphasé (14) pour limiter le courant de fermeture de circuit (I), destiné à être utilisé dans un dispositif (10) selon la revendication 1.
